# EUROPEAN PATENT SPECIFICATION

(11) **EP 4 600 079 B1**
(45) Date of publication and mention of the grant of the patent: **23.09.2026**
(21) Application number: 24156339.4
(22) Date of filing: 07.02.2024
(51) Int. Cl.: B60L 53/31, B60L 53/60, B60L 53/14, B60L 53/30, B60L 53/63, B60L 53/64, B60L 53/65, B60L 53/66

(54) **CHARGING CONTROL FOR AN ELECTRIC VEHICLE WITH RESTART OF CHARGING FUNCTION TEST**
LADESTEUERUNG FÜR EIN ELEKTROFAHRZEUG MIT NEUSTART DER LADEFUNKTIONSPRÜFUNG
COMMANDE DE CHARGE POUR UN VÉHICULE ÉLECTRIQUE AVEC REPRISE DU TEST DE LA FONCTION CHARGE

(43) Date of publication of application: 13.08.2025
(73) Proprietor: VOLVO TRUCK CORPORATION, 405 08 Göteborg (SE)
(72) Inventor: PERERA, Marthrage Supun Nadeeshka, 418 76 GÖTEBORG (SE); JOSEFSSON, Simon, 414 62 GÖTEBORG (SE); SERRA DALMAU, Albert, 418 71 GÖTEBORG (SE); STORCKENFELDT, Carl, 412 75 GÖTEBORG (SE); KANAGARAJ, Gireesha, 412 67 GÖTEBORG (SE)
(74) Representative: Ström & Gulliksson AB

(56) References cited:
- JP-A- 2016 127 606
- JP-A- 2017 192 215
- JP-A- 2023 132 260
- US-A1- 2011 196 545
- US-A1- 2014 042 985

## Description

### TECHNICAL FIELD

The disclosure relates generally to vehicle energy management. In particular aspects, the disclosure relates to charging control for an electric vehicle (EV). The disclosure can be applied to electric heavy-duty vehicles, such as trucks, buses, and construction equipment, among other vehicle types. The disclosure can also be applied to other EVs, such as electric marine vessels, electric construction equipment, electric personal vehicles, among other vehicle types. Although the disclosure may be described with respect to a particular vehicle, the disclosure is not restricted to any particular vehicle.

### BACKGROUND

Charging of EVs is necessary to replenish the energy stored in their batteries, ensuring continued operation and enabling sustainable and clean transportation. Certain charging periods tend to last for a longer time than what is needed in order to reach a target state of charge, SoC, of batteries in the vehicle. The batteries may therefore reach its target state of charge a relatively long time before the energy stored in the batteries are to be subsequently consumed. As a consequence, the time period between the batteries reaching a target state of charge and the vehicle being powered with energy from the batteries causes energy to continuously be depleted from the batteries. When the vehicle is ready to be operated the battery SoC will not be as high as anticipated due to this energy depletion time period. This can negatively affect the driving range, increase the frequency of charging sessions, cause potential inconvenience due to more frequent stops, increase the risk of the driver experiencing range anxiety due to concerns about running out of battery power before reaching their destination, to name a few problems.

It is in view of the above observations and others the present inventors herein are suggesting one or more improvements to the prior art of EV charging control.

US 2011/196545 A1 describes a charging system for charging a power storage device mounted on a vehicle by a power supply provided outside the vehicle. The system is able to stop the charging when the vehicle moves during charging, diagnose the state of the charging unit, and resume the charging if the charging unit is in a normal state.

JP 2016 127606 A describes a charging control device for a vehicle with a battery, where the device acquires authentication information, performs an authentication process, sets charging conditions, and performs the authentication process again using stored information related to the authentication process before starting or restarting charging, in order to reduce the user's operation burden in a configuration that requires authentication prior to vehicle charging.

### SUMMARY

Certain charging equipment, herein denoted EVSE (Electric Vehicle Supply Equipment), have the functionality of automatically restarting upon detecting a battery depletion during idle periods of the vehicle. EVSE having built-in restart functionalities can thus mitigate the energy depletion period by causing automatic restarts of the charging during idle periods. However, in some scenarios the restart functionalities do not work as intended due to anomalies such as technical malfunctions, software glitches, communication errors, incompatible systems, power supply issues, usage errors, network connectivity problems, old firmware versions, security concerns, environmental conditions, and more. In addition, restart of charging undeniably fails to function where the EVSE does not have such a functionality.

The present disclosure therefore aims to overcome the problem of handling long-term charging of EVs where the EVSE lacks automatic restart functionalities or there may exist problems with existing automatic restart functionalities due to one or more of the issues (or other related issues) mentioned above.

According to a first aspect of the disclosure there is provided a computer system for controlling charging of an EV. The computer system comprises processing circuitry configured to perform a functionality test routine in response to the EV being connected to an Electric Vehicle Supply Equipment, EVSE, the functionality test routine being adapted to identify a charging restart functionality in the EVSE; determine, based on an outcome of the functionality test routine, an anomaly or absence of the charging restart functionality of the EVSE; and in response to determining the anomaly or absence of the charging restart functionality, control a charging rate provided by the EVSE to the EV.

The first aspect of the disclosure may seek to manage undesirable battery energy losses caused by an extended idling period of the EV after a charging has been completed. Effective long-time charging is thereby enabled for EVSE lacking or experiencing problems with existing charging restart functionalities. Solving the issue of energy depletion during vehicle standby may involve technical effects related to improvements in driving range, reducing the need for frequent charging stops, alleviating concerns about range anxiety. Together these advantages ensure a more predictable and satisfactory EV experience, promoting user confidence and adoption, thereby contributing to a smoother integration of EVs into daily use.

Optionally in some examples, including in at least one preferred example, the processing circuitry is configured to perform the functionality test routine by causing transmission of a plurality of different charging requests from the EV to the EVSE. A technical benefit may include being able to test a wide range of charging scenarios, identify and diagnose possible problems or lack of functionality, and ensure compatibility between the EV and the EVSE.

Optionally in some examples, including in at least one preferred example, the plurality of different charging requests comprises: a first request for charging a battery of the EV, wherein the battery is adapted to be charged at a first charging rate following a response by the EVSE to the first request; and a second request for interrupting the charging of the battery effected by the first request, wherein charging of the battery is adapted to be interrupted following a response by the EVSE to the second request. A technical benefit may include being able to establish whether there is an anomaly of a charging restart functionality or whether said charging restart functionality exists within the EVSE in a way that does not require additional hardware or devices and is compatible with any suitable EVSE standard.

Optionally in some examples, including in at least one preferred example, the first request comprises a first predetermined threshold value being indicative of a target for the charging of the battery, the first predetermined threshold value being a target SoC of the battery, and wherein the processing circuitry is further configured to transmit the second request in response to said first predetermined threshold value being exceeded. A technical benefit may include a more predictable behaviour of detection which leads to an improved control of the charging.

Optionally in some examples, including in at least one preferred example, the processing circuitry is configured to determine the charging restart functionality as experiencing an anomaly or being absent in response to determining a charge condition following the interruption of the charging of the battery. A technical benefit may include obtaining direct input of the determined charge condition to provide an improved verification of whether the EVSE has or experiencing an anomaly with its charging restart functionality.

Optionally in some examples, including in at least one preferred example, the plurality of different requests comprises a third request being configured to cause identification of an idle state of the EVSE, and the processing circuitry is configured to determine the charge condition after the EVSE having responded to the third request. A technical benefit may include determining the charge condition based on a state of the EVSE, which can be a reliable way of identifying a charging status.

Optionally in some examples, including in at least one preferred example, the processing circuitry is configured to determine the charge condition in response to obtaining an indicator of a state of charge, SoC, from the battery. A technical benefit may include determining the charge condition based on the state of charge, which can be a reliable way of identifying a charging status.

Optionally in some examples, including in at least one preferred example, the expected SoC value is based on battery characteristics of the battery and charging capability properties of the EVSE. A technical benefit may include offering of a variety of different characteristics/properties that can determine the charging status, which is both versatile and effective.

Optionally in some examples, including in at least one preferred example, the processing circuitry is configured to control the charging rate provided by the EVSE to the EV by transmitting a reduced charging request from the EV to the EVSE involving a request for a reduced charging rate, wherein the battery is adapted to be charged at said reduced charging rate following a response by the EVSE to the reduced charging request. A technical benefit may include reducing the risk of the energy being replenished too quickly leading to an unwanted energy depletion of the battery, especially for relatively longer charging periods.

Optionally in some examples, including in at least one preferred example, the reduced charging request comprises a predetermined charge threshold value being indicative of a desired final SoC for the battery. A technical benefit may include specifying an approximate final SoC value that is sufficient to continue driving, thereby improving the control of the reduced charging rate.

Optionally in some examples, including in at least one preferred example, the reduced charging rate is based on an estimated upcoming idling time of the EV, the estimated upcoming idling time being obtained from one or more of user input, a mission management system, a prediction algorithm, and a geographical service provider. A technical benefit may include offering numerous different ways of providing estimates of the upcoming idling time, which improves the chances of the SoC level being higher upon a continued driving of the EV.

According to a second aspect of the disclosure there is provided an electric vehicle comprising the computer system of the first aspect.

According to a third aspect of the disclosure there is provided a computer-implemented method for controlling charging of an EV. The method comprises performing, by processing circuitry of a computer system, a functionality test routine in response to the EV being connected to an EVSE, the functionality test routine being adapted to identify a charging restart functionality in the EVSE; determining, by the processing circuitry, based on an outcome of the functionality test routine, an anomaly or absence of the charging restart functionality of the EVSE; and in response to determining the anomaly or absence of the charging restart functionality, controlling, by the processing circuitry, a charging rate provided by the EVSE to the EV.

According to a fourth aspect of the disclosure there is provided a computer program product comprising program code for performing, when executed by the processing circuitry, the method of the third aspect.

According to a fifth aspect of the disclosure there is provided a non-transitory computer-readable storage medium comprising instructions, which when executed by the processing circuitry, cause the processing circuitry to perform the method of the third aspect. The fifth aspect of the disclosure may seek to enable new vehicles and/or legacy vehicles to be conveniently configured, by software installation/update, for controlling charging of an EV in a reliable manner.

The second, third, fourth and fifth aspects of the disclosure may seek to manage undesirable battery energy losses caused by an extended idling period of the EV after a charging has been completed. Effective long-time charging is thereby enabled for EVSE lacking or experiencing problems with existing charging restart functionalities. Solving the issue of energy depletion during vehicle standby may involve technical effects related to improvements in driving range, reducing the need for frequent charging stops, alleviating concerns about range anxiety. Together these advantages ensure a more predictable and satisfactory EV experience, promoting user confidence and adoption, thereby contributing to a smoother integration of EVs into daily use.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of an EV.
**FIG. 2** is an exemplary flowchart diagram illustrating various ways of controlling charging utilizing communication between the EV and the EVSE.
**FIG. 3** is an exemplary diagram illustrating SoC as a function of time using various approaches of charging control.
**FIG. 4** is an exemplary illustration of a method for controlling charging of an EV.
**FIG. 5** is a schematic diagram of an exemplary computer system for implementing examples disclosed herein.

### DETAILED DESCRIPTION

The detailed description set forth below provides information and examples of the disclosed technology with sufficient detail to enable those skilled in the art to practice the disclosure.

The subject matter of the present disclosure addresses the issues mentioned in the background section by way of managing undesirable battery energy losses caused by an extended idling period of the EV after a charging has been completed. This is done by introducing a functionality test routine between the EV and the EVSE in response the EV being connected to the EVSE, which is adapted to identify an existence of a charging restart functionality. Based on an outcome of the functionality test routine, an anomaly or absence of the charging restart functionality can be determined, and a charging rate provided by the EVSE to the EV can be controlled accordingly. Effective long-time charging is thereby enabled for EVSE lacking or experiencing problems with existing charging restart functionalities. Solving the issue of energy depletion during vehicle standby may involve technical effects related to improvements in driving range, reducing the need for frequent charging stops, alleviating concerns about range anxiety. Together these advantages ensure a more predictable and satisfactory EV experience, promoting user confidence and adoption, thereby contributing to a smoother integration of EVs into daily use.

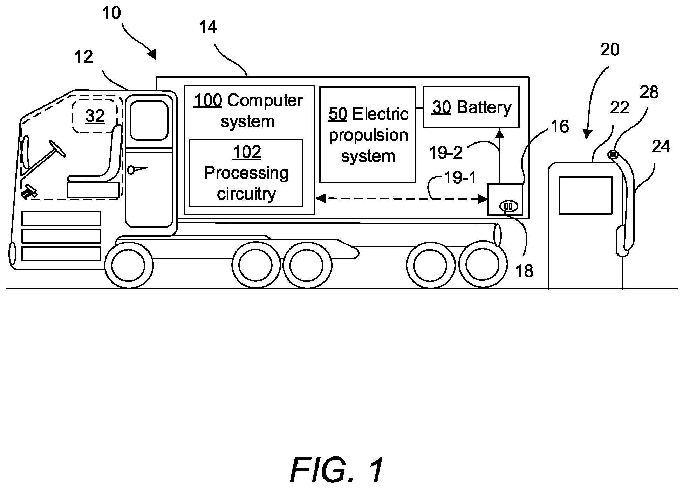

**FIG. 1** is an exemplary schematic illustration of an EV **10.** The EV **10** is illustrated as a heavy-duty vehicle, in this case a truck. The EV **10** may in other examples be electric buses, electric marine vessels, electric construction equipment, electric personal vehicles, among other vehicle types. Generally, the subject matter herein may be applied for EVs **10** using electric motors as their primary source of propulsion.

The EV **10** comprises a tractor unit **12** which is arranged to tow a trailer unit **14.** The EV **10** comprises vehicle units and associated functionality as would be understood and expected by a skilled person, such as a powertrain, chassis, and various control systems.

The EV **10** comprises an electric propulsion system **50.** The electric propulsion system **50** may be a battery electric propulsion system, a hybrid propulsion system, or other electric propulsion systems known in the art. The electric propulsion system **50** comprises one or more electric motors connected to the wheels or drivetrain of the EV **10.** When the EV **10** accelerates, the electric motors draw power from a battery **30** and converts it into mechanical energy to propel the EV **10** forward. During deceleration or braking, regenerative braking systems can reverse the process, i.e., converting kinetic energy back into electrical energy and directing it back into the battery **30** for storage.

The battery **30** may be a lithium-ion battery, lithium iron phosphate battery, solid-state battery, graphene battery, sodium-ion battery, nickel-cobalt-manganese battery, aluminum-ion battery, or other battery types known in the art. The battery **30** is used to store electrical energy. The battery **30** is rechargeable and adapted to provide a source of electricity for the electric propulsion system **50.** During charging, electricity from an external power source, is used to replenish the energy stored in the battery **30.** In the present disclosure this external power source is an EVSE **20,** depicted in **FIG. 1** as a charging station. The stored electrical energy is then made available for the electric propulsion system **50** when the vehicle is in motion.

The battery **30** includes individual battery cells capable of storing the electrical energy. While the present disclosure refers to a singular battery **30** for reasons of brevity, the EV **10** typically includes a plurality of batteries **30.** Subsets of the plurality of batteries are assembled into larger battery pack structures encapsulating a multitude of individual cells and batteries **30.** The EV **10** may include a plurality of battery packs.

A battery management system (BMS, not shown) may be provided for monitoring, protecting and optimizing the performance of the battery **30,** thereby ensuring safe and efficient operation and prolonging the lifetime expectancy of the battery **30.**

The EVSE **20** refers to the infrastructure, commonly known as a charging station or charging point, that supplies electric energy for recharging the EV **10.** The EVSE **20** may be a charging device adapted to provide electrical power to the EV **20.** The EVSE **20** may be a public or private station. The EVSE **20** is the connection point between the electric grid and the EV **10,** providing the necessary interface for charging. The EVSE **20** includes the charging station **22,** a charging cable **24** with an associated connector or plug **28,** and other control equipment and software. The plug **28** (male part) is adapted to fit a connector inlet **18** (female part) of a charging port **16** of the EV **10.**

The EVSE **20** may be categorized as any type readily adaptable to charge EVs **20,** including type 2 EVSE ("standard" charging station typically operating at 240 V) and type 3 EVSE (DC fast charging). The EVSE **20** may be adapted for both AC and DC charging.

The EVSE **20** is capable of communicating both power and data. The power is communicated via a power line of the charging cable **24** and the data via a data line. The data line may be a wired connection within the charging cable **24.** The data line may alternatively or additionally be effected over a wireless communication channel. The wireless communication channel typically employs short-range communication standards, as the EV **10** would typically be close to the EVSE **20** during charging. However, long-range communication standards may alternatively be employed. Short-range communication standards include, for instance, IEEE 802.11, IEEE 802.15, ZigBee, WirelessHART, WiFi, Bluetooth^{®}, BLE, RFID, WLAN, MQTT IoT, CoAP, DDS, NFC, AMQP, LoRaWAN, Z-Wave, Sigfox, Thread, EnOcean, mesh communication, or any other form of proximity-based device-to-device radio communication signal such as LTE Direct. Long-range communication interfaces include, for instance, W-CDMA/HSPA, GSM, UTRAN or LTE.

In communication with the EVSE **20,** the EV **10** utilizes on-vehicle communication interfaces **19-1, 19-2.** A data communication interface **19-1** is configured to manage data connections between the processing circuitry **102** and the EVSE **20** via the charging cable **24,** or optionally via wireless communication. A power communication interface **19-2** is configured to manage power connections between the battery **30** and the EVSE **20** via the charging cable **24.**

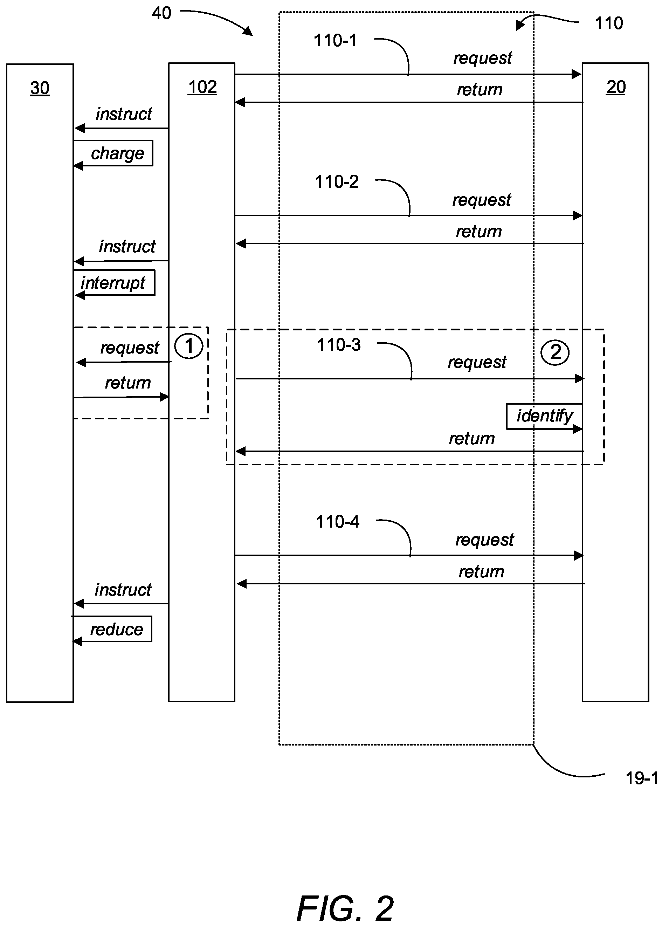

The EV **10** comprises a computer system **100** having processing circuitry **102.** The processing circuitry **102** is configured for controlling charging of the EV **10,** and more specifically of the battery **30.** This is done by communicating with the EVSE **20.** The processing circuitry **102** is configured to perform a functionality test routine when the EV **10** is connected to the EVSE **20.** The functionality test routine is adapted to identify an existence of a charging restart functionality in the EVSE **20.** Based on an outcome of the functionality test routine, the processing circuitry **102** is configured to determine an anomaly or absence of the charging restart functionality. Where the charging restart functionality is determined to be non-existent or experiencing an anomaly, the processing circuitry **102** is further configured to control a charging rate provided by the EVSE **20** to the EV **10.** This procedure will now be explained in detail with further reference to **FIG. 2****.**

**FIG. 2** is an exemplary flowchart diagram illustrating how a functionality test routine **40** can be carried out. The components taking part in this procedure is primarily the battery **30,** the processing circuitry **102** and the EVSE **20.** Generally, the functionality test routine **40** involves a transmission of a plurality of different charging requests **110** from the EV **10,** more specifically the processing circuitry **102** therein, to the EVSE **20.** This is accordingly a software solution carried out over the on-vehicle data communication interface **19-1** as discussed herein. The requests **110** may be sent wiredly or wirelessly.

The functionality test routine **40** is advantageously integrated in and performed during the normal charging procedure of the EV **10** and does not require any excess hardware or communication modules. To this end, the computer system **100** is preferably an on-board system, and the processing circuitry **102** is configured to communicate with the EVSE **20** via the charging cable **24** for purposes of carrying out the functionality test routine **40** through the on-vehicle data communication interface **19-1.**

The functionality test routine **40** may be performed in response to receiving input from a human-machine interface. The human-machine interface may be arranged in the cabin of the EV **10,** as is shown at **32** in **FIG. 1****,** or elsewhere in the EV **10.** Alternatively, the inputs may be received from an external device operable by a driver of the EV **10.** Inputs may also be received from a cloud-based service. In some examples, the functionality test routine **40** is automatically triggered upon a connection between the EV **10** and the EVSE **20** being detected.

In some examples, the charging requests **110** involve a first and second request **110-1, 110-2.** These are sent between the processing circuitry **102** and the EVSE **20.** The first and second requests **110-1, 110-2** involve a respective return or answer from the EVSE **20.** The purpose of the first and second requests **110-1, 110-2** is to establish whether there is an anomaly of a charging restart functionality or whether said charging restart functionality exists within the EVSE **20.**

The first request **110-1** is a request for charging the battery **30.** This may be interpreted as an initiation of a charging procedure for the EV **20.** The request for charging the battery **30** includes a requested first charging rate. The first charging rate may involve a first predetermined threshold value being indicative of a target for the charging of the battery **30.** The first predetermined threshold value is a target SoC of the battery **30,** i.e., a desired charging level of the battery **30** after finishing the charging, such as any percentage value of SoC. In some alternative examples, the first predetermined threshold value may be a target time during which the EV **10** is to be charged, such as one or more minutes or hours, a specified time such as 14:00 Friday, or the like. Once the EVSE **20** returns the request, for example through an ACK message, the processing circuitry **102** is configured to instruct the battery **30** to charge according to the first request **110-1.** While not explicitly shown in the illustration, charging of the battery **30** is accordingly initiated over the power line from the EVSE **20** to the battery **30.**

The second request **110-2** is a request for interrupting the charging of the battery **30** effected by the first request **110-1.** The second request **110-2** is carried an arbitrary or predetermined time period after the charging of the battery **30** according to the first request **110-1** has been initiated. The time between the initiation of the charging and the transmission of the second request **110-2** is not necessarily important. It is sufficient to submit the second request **110-2** just as the charging has been initiated, i.e., a time above zero. This is due to the fact that the functionality test routine **40** aims to discover the charging behaviour after the interruption of the charging of the battery **30** at the first charging rate. This also means that it is not necessarily important that the first charging rate is a particular value, provided that it is above zero. In examples where the first predetermined threshold value is defined according to the above, the second request **110-2** may be transmitted in response to the first predetermined threshold value being exceeded. This corresponds to the target being reached, such as the target SoC or the target time, depending on what value is being considered. Once the EVSE **20** returns the request, for example through an ACK message, the processing circuitry **102** is configured to instruct the battery **30** to interrupt the charging over the power line.

In some examples, the charging restart functionality may be determined as experiencing an anomaly or being absent in response to determining a charge condition. The charge condition is determined following the interruption (caused by the second request **110-2**) of the charging (caused by the first request **110-1**) of the battery **30.** Determining the charge condition aims to establish the charging behaviour once the charging has been interrupted. The charge condition may indicate whether a restart of the charging has been activated following the interruption. If this is the case the EVSE **20** has a restart charging functionality. If this not the case, however, the EVSE **20** may not have a restart charging functionality. The charge condition may also indicate to what extent or how a restart of the charging has been activated. If the charge condition indicates that charging has indeed been restarted, but not according to an expected behaviour, this may be an indication that the existing charging restart functionality is experiencing an anomaly and is not working as intended. For example, the charging may have been restarted with a lower charging rate than expected, at a later point in time than expected, or the like.

Two different approaches of determining the charge condition are explained herein and shown in **FIG. 2** as (1) and (2), respectively. These may be employed separately, or optionally together. Other exemplary ways of determining a charge condition of a battery may be envisaged by the skilled person.

The first approach (1) involves obtaining an indicator of an expected SoC from the battery **30.** This may involve a request for such indicator followed by a return, for example through an ACK message, from the battery **30.** The indicator may be obtained from the BMS adapted to supervise the battery **30.** The indicator may correspond to an internal state involving battery data such as capacity, voltage, SoC, health, or other relevant parameters referring to a current condition or status of the battery **30.** The expected SoC of the indicator may be based on battery characteristics of the battery **30.** Battery characteristics may include capacity, voltage, energy density, cycling life, self-discharge rate, charge/discharge efficiency, temperature sensitivity, safety, chemistry, or the like. The expected SoC of the indicator may be based on charging capability properties of the EVSE **20.** The charging capability properties may include charging power, voltage, charging connector type, charging speeds, charging standards, network connectivity, cable length, authentication and payment details, smart charging features, safety features, or the like. The indicator may give an immediate (or possibly with some minor transmission delays) feedback as to whether a charging has been re-initiated or not, which is obtained by the processing circuitry **102.** The processing circuitry **102** is accordingly updated of whether the charging restart functionality is experiencing an anomaly, being absent, or being present and functioning according to an intended restart functionality behaviour. In other possible implementations the charge condition can optionally be determined by comparing a current SoC of the battery (e.g. as obtained from the BMS generally according to the above), and compare the current SoC against an expected SoC over time.

The second approach (2) involves a third request **110-3** between the processing circuitry **102** and the EVSE **20.** The third request **110-3** is configured to cause an identification of an idle state of the EVSE **20.** The idle state refers to a condition when the EVSE **20** is connected and ready but not actively charging the EV **10.** The third request **110-3** can thus be interpreted as asking a question to the EVSE **20** as to whether it is charging the EV **10** (indicative of an existing charging restart functionality) or to what extent (indicative of an anomaly in the charging restart functionality). In response to the EVSE **20** returning a message, for example through an ACK message, to the processing circuitry **102,** the charge condition can be determined.

The processing circuitry **102** has now determined whether there is an anomaly or absence of a charging restart functionality of the EVSE **20,** for example utilizing the approaches related to the first and second requests **110-1, 110-2** as discussed above. The charging rate provided by the EVSE **20** to the EV **10** may accordingly be controlled.

In some examples, the processing circuitry **102** is configured to control the charging rate by transmitting a reduced charging request **110-4** from the EV **10** to the EVSE **20** involving a request for a reduced charging rate. This is shown in **FIG. 2** as the last step succeeding the approaches (1) and (2) as described above. The reduced charging request **110-4** involves, similar to the other requests **110-1, 110-2, 110-3,** a request to followed by a response, for example through an ACK message, from the EVSE **20.** Following the response message the processing circuitry **102** is configured to instruct the battery **30** to adapt its charging rate to the reduced charging rate. The reduced charging rate is thus lower than the first charging rate, but above zero (hence the term *reduced*). The reduced charging rate may be effected similar to how the first charging rate was effected. By way of the reduced charging rate, it is possible to enable a delayed charging for long-term charging periods, even in cases where the EVSE **20** lacks or has an anomaly associated with its charging restart functionality.

In some examples, the reduced charging request **110-4** comprises a predetermined charge threshold value being indicative of a desired final SoC for the battery **30.** The desired final SoC is typically a fully charged SoC value, although variations may apply. A fully charged SoC signifies a charge value corresponding to that the battery **30** has reached its maximum capacity, containing the highest amount of energy it can store.

In some examples, the reduced charging rate included in the reduced charging request **110-4** is based on an estimated upcoming idling time of the EV **10.** The estimated upcoming idling time is an estimate of how long time the EV **10** will be charged at the reduced charging rate before energy from the battery **30** will continue to be consumed. While this is typically not exactly know, a general estimate can oftentimes be provided. For example, it may be known that a lunch break for the driver may last for approximately one hour. In another example, it may be known that the next time the EV **10** will be driven is tomorrow at 8 AM, on Friday at 1 PM, or practically any other suitable approximate time for when the EV **10** is expected to continue consuming energy from the battery **30.**

The estimated upcoming idling time may be obtained from various sources. In some examples the estimated upcoming idling time is obtained from user input. The driver of the EV **10** can in these examples input to the EV **10,** for example via an input device such as the human-machine interface **32** or a mobile device, the expected time before an upcoming continued driving. In some examples the estimated upcoming idling time is obtained from a mission management system. The mission management system is a centralized software or hardware solution designed to plan, monitor, and coordinate various aspects of a mission or project, such as relating to a driving schedule of the EV **10.** In some examples the estimated upcoming idling time is obtained from a prediction algorithm. The prediction algorithm is a computational model designed to anticipate future events or conditions based on current and historical data. It analyzes sensor inputs, environmental factors, and past patterns to forecast potential scenarios, allowing the EV's **10** systems to proactively respond and improve the predictions of future or current vehicle charging stops. This may be particularly useful in contexts of autonomously driven vehicles or advanced driver-assistance systems (ADAS). In some examples the estimated upcoming idling time is obtained from a geographical service provider. The geographical service provider is a company or system that offers location-based services, utilizing geographic information systems (GIS) and spatial data. The geographical service provider offers solutions such as mapping, navigation, and location-based analytics relating to maps, routes, points of interest, and spatial analysis. For example, the geographical service provider may indicate that there is a traffic congestion that will last for a predetermined time period, and the reduced charging rate is thus adapted to account for the time during which the predetermined time period is pending.

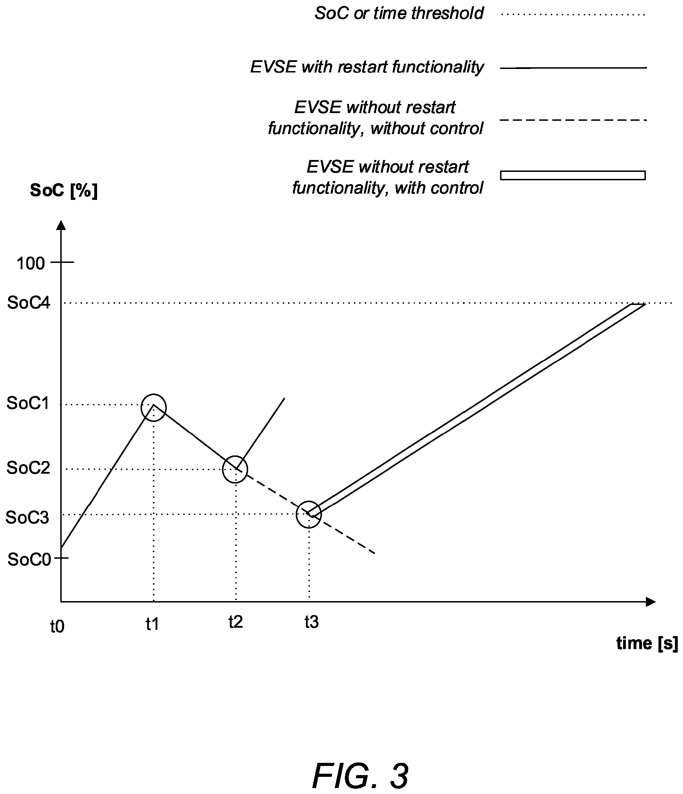

With further reference to **FIG. 3****,** a charging procedure according to teachings explained herein is further exemplified in a diagram illustration. The diagram illustration shows SoC [%] as a function over time [s]. Three different EVSE behaviours are depicted. The first behaviour is depicted in the uniform line and corresponds to how the charging would be realized for an EVSE having a restart functionality. The second behaviour is depicted in the dashed line and corresponds to how the charging would be realized for an EVSE without a restart functionality and without a charging control according to teachings herein. It shall be noted that the second behaviour would be the same, or at least similar, in cases where the EVSE has a restart functionality, but is experiencing one or more anomalies. The third behaviour is depicted in the patterned line and corresponds to an EVSE without a restart functionality (or with a restart functionality experiencing one or more anomalies). For illustrative purposes, the time period between t0 and t2 is common for all three behaviours, and the time period between t2 and t3 is common for the second and third behaviour. Moreover, the dotted lines in the illustration refers to various time or SoC threshold values (SoC1, t1), (SoC2, t2), (SoC3, t3).

The charging between SoC0, t0 and SoC1, t1 is common for all behaviours. This corresponds to the first request **110-1** causing the battery **30** to be charged at a first charging rate. This may be done until SoC1 or t1 is reached, indicated by the first circle at threshold value SoC1, t1.

After threshold value SoC1, t1, the second request **110-2** has effected an interruption of the charging, thereby causing a subsequent depletion of energy in the battery over time until the threshold value SoC2, t2 is reached.

At threshold value SoC2, t2, indicated by the second circle, the EVSE having a restart functionality would cause a restart of the charging such that charging of the battery would be restarted typically at the same rate as the first charging rate.

At threshold value SoC2, t2, the EVSE without restart functionality, regardless of whether the charging control as described herein would be employed or not, would not cause a restart of the charging. Energy depletion from the battery would thus continue for as long as the EV would remain idle and for as long as no further action would be performed, such as triggering a manual restart of the charging. To this end, for the EVSE without control (the dashed line) would not restart, eventually leading to the SoC of the battery reaching SoC0 being a fully depleted SoC. Employing the functionality test routine as described herein (the patterned line), the EVSE would thus cause a restart of the charging at threshold value SoC3, t3, indicated by the third circle, optionally with a reduced charging rate as is depicted in this illustration. This would then be maintained until a desired SoC value is reached, which in this example is at SoC4. Effective long-time charging is thereby enabled for EVSE lacking or experiencing problems with existing charging restart functionalities.

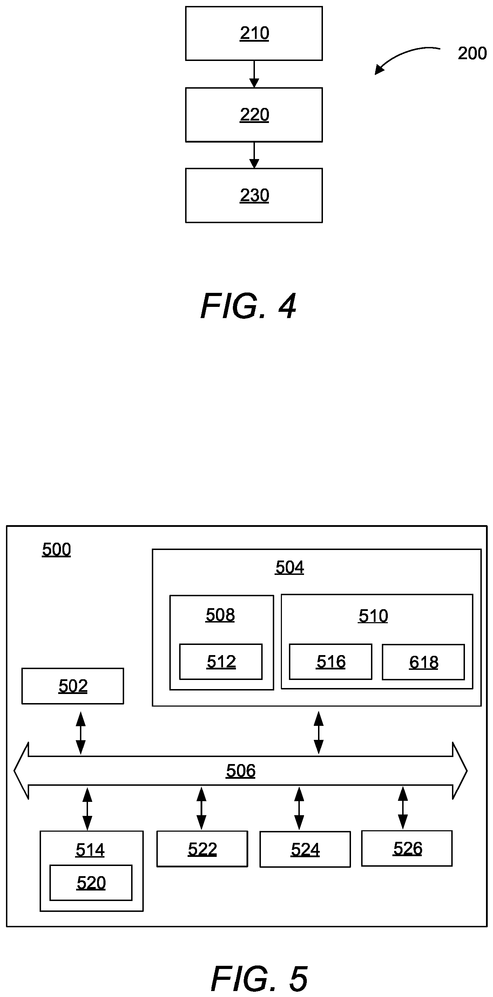

**FIG. 4** is a flowchart of a computer-implemented method **200** for controlling charging of an EV. The method **200** comprises performing **210,** by processing circuitry of a computer system, a functionality test routine in response to the EV being connected to an EVSE, the functionality test routine being adapted to identify a charging restart functionality in the EVSE. The method **200** further comprises determining **220,** by the processing circuitry, based on an outcome of the functionality test routine, an anomaly or absence of the charging restart functionality of the EVSE. The method **200** further comprises, in response to determining the anomaly or absence of the charging restart functionality, controlling **230,** by the processing circuitry, a charging rate provided by the EVSE to the EV.

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

## Claims

1. A computer system (100; 500) for controlling charging of an electric vehicle, EV (10), the computer system (100; 500) comprising processing circuitry (102; 502) configured to:
perform a functionality test routine (40) in response to the EV (10) being connected to an Electric Vehicle Supply Equipment, EVSE (20), the functionality test routine (40) being adapted to identify a charging restart functionality in the EVSE (20);
wherein the processing circuitry (102; 502) is **characterized in that** it is further configured to:
determine, based on an outcome of the functionality test routine (40), an anomaly or absence of the charging restart functionality of the EVSE (20); and
in response to determining the anomaly or absence of the charging restart functionality, control a charging rate provided by the EVSE (20) to the EV (10).

2. The computer system (100; 500) of claim 1, wherein the processing circuitry (102; 502) is configured to perform the functionality test routine (40) by causing transmission of a plurality of different charging requests (110) from the EV (10) to the EVSE (20).

3. The computer system (100; 500) of claim 2, wherein the plurality of different charging requests (110) comprises:
a first request (110-1) for charging a battery (30) of the EV (10), wherein the battery (30) is adapted to be charged at a first charging rate following a response by the EVSE (20) to the first request (110-1); and
a second request (110-2) for interrupting the charging of the battery (30) effected by the first request (110-1), wherein charging of the battery (30) is adapted to be interrupted following a response by the EVSE (20) to the second request (110-2).

4. The computer system (100; 500) of claim 3, wherein the first request (110-1) comprises a first predetermined threshold value being indicative of a target for the charging of the battery (30), the first predetermined threshold value being a target SoC of the battery (30), and
wherein the processing circuitry (102; 502) is further configured to transmit the second request (110-2) in response to said first predetermined threshold value being exceeded.

5. The computer system of any of claims 3-4, wherein the processing circuitry (102; 502) is configured to determine that the charging restart functionality is experiencing an anomaly or that the charging restart functionality is absent in response to determining a charge condition of the battery (30) following the interruption of the charging of the battery (30).

6. The computer system (100; 500) of claim 5, wherein the plurality of different requests (110) comprises a third request (110-3) being configured to cause identification of an idle state of the EVSE (20), and the processing circuitry (102; 502) is configured to determine the charge condition after the EVSE (20) having responded to the third request (110-3).

7. The computer system (100; 500) of any of claims 5-6, wherein the processing circuitry (102; 502) is configured to determine the charge condition in response to obtaining an indicator of a state of charge, SoC, from the battery (30).

8. The computer system (100; 500) of claim 7, wherein the expected SoC value is based on battery characteristics of the battery (30) and charging capability properties of the EVSE (20).

9. The computer system (100; 500) of any of claims 1-8, wherein the processing circuitry (102; 502) is configured to control the charging rate provided by the EVSE (20) to the EV (10) by transmitting a reduced charging request (110-4) from the EV (10) to the EVSE (20) involving a request for a reduced charging rate, wherein the battery (30) is adapted to be charged at said reduced charging rate following a response by the EVSE (20) to the reduced charging request (110-4).

10. The computer system (100; 500) of claim 9, wherein the reduced charging request (110-4) comprises a predetermined charge threshold value being indicative of a desired final SoC for the battery (30).

11. The computer system (100; 500) of any of claims 9-10, wherein the reduced charging rate is based on an estimated upcoming idling time of the EV (10), the estimated upcoming idling time being obtained from one or more of user input, a mission management system, a prediction algorithm, and a geographical service provider.

12. An electric vehicle (100; 500) comprising the computer system of any of claims 1-11.

13. A computer-implemented method (200) for controlling charging of an electric vehicle, EV (10), comprising:
performing (210), by processing circuitry (102; 502) of a computer system (100; 500), a functionality test routine (40) in response to the EV (10) being connected to an Electric Vehicle Supply Equipment, EVSE (20), the functionality test routine (40) being adapted to identify a charging restart functionality in the EVSE (20);
wherein the method (200) is **characterized in that** it further comprises:
determining (220), by the processing circuitry (102; 502), based on an outcome of the functionality test routine (40), an anomaly or absence of the charging restart functionality of the EVSE (20); and
in response to determining the anomaly or absence of the charging restart functionality, controlling (230), by the processing circuitry (102; 502), a charging rate provided by the EVSE (20) to the EV (10).

14. A computer program product comprising program code for performing, when executed by the processing circuitry (102; 502), the method of claim 13.

15. A non-transitory computer-readable storage medium comprising instructions, which when executed by the processing circuitry (102; 502), cause the processing circuitry (102; 502) to perform the method of claim 13.

## Patentansprüche

1. Ein Computersystem (100; 500) zur Steuerung des Ladevorgangs eines Elektrofahrzeugs (EV) (10), wobei das Computersystem (100; 500) eine Verarbeitungsschaltung (102; 502) umfasst, die konfiguriert ist, um:
eine Funktionalitätstestroutine (40) als Reaktion darauf auszuführen, dass das EV (10) mit einer elektrischen Ladeeinrichtung (EVSE) (20) verbunden ist, wobei die Funktionalitätstestroutine (40) dazu geeignet ist, eine Lade-Wiederholfunktion in der EVSE (20) zu identifizieren;
wobei die Verarbeitungsschaltung (102; 502) **dadurch gekennzeichnet ist, dass** sie ferner konfiguriert ist, um:
basierend auf einem Ergebnis der Funktionalitätstestroutine (40), eine Anomalie oder das Fehlen der Lade-Wiederholfunktion der EVSE (20) zu bestimmen; und
als Reaktion auf die Bestimmung der Anomalie oder des Fehlens der Lade-Wiederholfunktion, eine Laderate zu steuern, die von der EVSE (20) an das EV (10) geliefert wird.

2. Das Computersystem (100; 500) gemäß Anspruch 1, wobei die Verarbeitungsschaltung (102; 502) konfiguriert ist, um die Funktionalitätstestroutine (40) auszuführen, indem eine Vielzahl unterschiedlicher Ladeanfragen (110) vom EV (10) an die EVSE (20) gesendet werden.

3. Das Computersystem (100; 500) gemäß Anspruch 2, wobei die Vielzahl unterschiedlicher Ladeanfragen (110) umfasst:
eine erste Anfrage (110-1) zum Laden einer Batterie (30) des EV (10), wobei die Batterie (30) dazu geeignet ist, mit einer ersten Laderate geladen zu werden, nachdem die EVSE (20) auf die erste Anfrage (110-1) geantwortet hat; und
eine zweite Anfrage (110-2) zum Unterbrechen des Ladevorgangs der Batterie (30), der durch die erste Anfrage (110-1) ausgelöst wird, wobei der Ladevorgang der Batterie (30) unterbrochen wird, nachdem die EVSE (20) auf die zweite Anfrage (110-2) geantwortet hat.

4. Das Computersystem (100; 500) gemäß Anspruch 3, wobei die erste Anfrage (110-1) einen ersten vorbestimmten Schwellenwert umfasst, der ein Ziel für das Laden der Batterie (30) angibt, wobei der erste vorbestimmte Schwellenwert ein Ziel-Ladezustand der Batterie (30) ist, und
wobei die Verarbeitungsschaltungen (102; 502) ferner so konfiguriert sind, dass sie die zweite Anfrage (110-2) als Reaktion darauf senden, dass der obenerwähnte, erste, vorbestimmte Schwellenwert überschritten wurde.

5. Das Computersystem gemäß einem der Ansprüche 3-4, wobei die Verarbeitungsschaltungen (102; 502) so konfiguriert sind, dass sie feststellen, dass die Funktionalität zum Neustart des Ladevorgangs eine Anomalie aufweist oder dass die Funktionalität zum Neustart des Ladevorgangs in der Batterie (30) nicht vorhanden ist, und zwar als Reaktion darauf, dass ein Ladezustand der Batterie (30) nach Unterbrechung des Ladevorgangs der Batterie (30) festgestellt wird.

6. Das Computersystem (100; 500) gemäß Anspruch 5, wobei die Mehrzahl der verschiedenen Anfragen (110) eine dritte Anfrage (110-3) umfasst, die dazu konfiguriert ist, die Identifizierung eines Leerlaufzustands der EVSE (20) zu veranlassen, und die Verarbeitungsschaltungen (102; 502) so konfiguriert sind, dass sie den Ladezustand feststellen, nachdem die EVSE (20) auf die dritte Anfrage (110-3) geantwortet hat.

7. Das Computersystem (100; 500) gemäß einem der Ansprüche 5-6, wobei die Verarbeitungsschaltungen (102; 502) so konfiguriert sind, dass sie den Ladezustand, als Reaktion auf die Erlangung eines von der Batterie (30) übertragenes Indikators für einen Ladezustand (SoC) der Batterie (30),feststellen.

8. Das Computersystem (100; 500) gemäß Anspruch 7, wobei der erwartete SoC-Wert auf Batteriemerkmale der Batterie (30) und Ladefähigkeitskennwerte der EVSE (20) basiert.

9. Das Computersystem (100; 500) gemäß einem der Ansprüche 1-8, wobei die Verarbeitungsschaltungen (102; 502) so konfiguriert sind, dass sie die vom EVSE (20) an das EV (10) gelieferte Laderate steuern, indem sie eine reduzierte Ladeanfrage (110-4) vom EV (10) an die EVSE (20) senden, die eine Anfrage nach einer reduzierten Laderate beinhaltet, wobei die Batterie (30) dazu geeignet ist, mit der reduzierten Laderate zu geladen zu werden, nachdem die EVSE (20) auf die reduzierte Ladeanfrage (110-4) geantwortet hat.

10. Das Computersystem (100; 500) gemäß Anspruch 9, wobei die reduzierte Ladeanfrage (110-4) einen vorbestimmten Ladeschwellenwert umfasst, der für einen gewünschten End-SoC der Batterie (30) bezeichnend ist.

11. Das Computersystem (100; 500) gemäß einem der Ansprüche 9-10, wobei die reduzierte Laderate auf eine geschätzte, bevorstehende Leerlaufzeit des EV (10) basiert, wobei die geschätzte, bevorstehende Leerlaufzeit von einer oder mehreren der folgenden Quellen erhalten wird: Benutzereingabe, ein Missionsmanagementsystem, ein Vorhersagealgorithmus und ein geografischer Dienstleister.

12. Ein Elektrofahrzeug (100; 500) mit dem Computersystem gemäß einem der Ansprüche 1-11.

13. Ein computerimplementiertes Verfahren (200) zur Steuerung des Ladevorgangs eines Elektrofahrzeugs (EV), (10), mit den folgenden Schritten:
Durchführen (210) einer Funktionalitätstestroutine (40) durch Verarbeitungsschaltungen (102; 502) eines Computersystems (100; 500) als Reaktion darauf, dass das EV (10) mit einer elektrischen Ladeeinrichtung (EVSE), (20), verbunden ist, wobei die Funktionalitätstestroutine (40) dazu geeignet ist, eine Neustartfunktionalität des Ladevorgangs in der EVSE (20) zu identifizieren;
wobei das Verfahren (200) sich dadurch auszeichnet, dass es ferner die folgenden Schritte umfasst:
Feststellen (220) durch die Verarbeitungsschaltungen (102; 502), basierend auf einem Ergebnis der Funktionalitätstestroutine (40), einer Anomalie oder des Fehlens der Neustartfunktionalität des Ladevorgangs der EVSE (20); und
Steuern (230) durch die Verarbeitungsschaltungen (102; 502) als Reaktion auf die Feststellung der Anomalie oder des Fehlens der Neustartfunktionalität des Ladevorgangs, einer vom EVSE (20) an das EV (10) gelieferten Laderate.

14. Ein Computerprogrammprodukt mit Programmcode zur Durchführung, wenn es durch die Verarbeitungsschaltungen (102; 502) ausgeführt wird, des Verfahrens gemäß Anspruch 13.

15. Ein nicht-flüchtiger, computerlesbares Speichermedium mit Anweisungen, die, wenn sie durch die Verarbeitungsschaltungen (102; 502) ausgeführt werden, die Verarbeitungsschaltungen (102; 502) veranlassen, das Verfahren gemäß Anspruch 13 auszuführen.

## Revendications

1. Un système informatique (100 ; 500) pour commander la charge d'un véhicule électrique, VE (10), le système informatique (100 ; 500) comprenant une circuiterie de traitement (102 ; 502) configurée pour :
effectuer une routine de test de fonctionnalité (40) en réponse au fait que le VE (10) est connecté à un équipement d'alimentation de véhicule électrique, EVSE (20), la routine de test de fonctionnalité (40) étant adaptée pour identifier une fonctionnalité de redémarrage de charge dans l'EVSE (20) ;
dans lequel la circuiterie de traitement (102 ; 502) est **caractérisée en ce qu'**elle est en outre configurée pour :
déterminer, sur la base d'un résultat de la routine de test de fonctionnalité (40), une anomalie ou une absence de la fonctionnalité de redémarrage de charge de l'EVSE (20) ; et
en réponse à la détermination de l'anomalie ou de l'absence de la fonctionnalité de redémarrage de charge, commander un taux de charge fourni par l'EVSE (20) au VE (10).

2. Le système informatique (100 ; 500) selon la revendication 1, dans lequel la circuiterie de traitement (102 ; 502) est configurée pour effectuer la routine de test de fonctionnalité (40) en provoquant la transmission d'une pluralité de demandes de charge différentes (110) du VE (10) à l'EVSE (20).

3. Le système informatique (100 ; 500) selon la revendication 2, dans lequel la pluralité de demandes de charge différentes (110) comprend :
une première demande (110-1) pour charger une batterie (30) du VE (10), dans lequel la batterie (30) est adaptée pour être chargée à un premier taux de charge à la suite d'une réponse par l'EVSE (20) à la première demande (110-1) ; et
une deuxième demande (110-2) pour interrompre la charge de la batterie (30) effectuée par la première demande (110-1), dans lequel la charge de la batterie (30) est adaptée pour être interrompue à la suite d'une réponse par l'EVSE (20) à la deuxième demande (110-2).

4. Le système informatique (100 ; 500) selon la revendication 3, dans lequel la première demande (110-1) comprend une première valeur seuil prédéterminée étant indicative d'une cible pour la charge de la batterie (30), la première valeur seuil prédéterminée étant un SoC cible de la batterie (30), et
dans lequel la circuiterie de traitement (102 ; 502) est en outre configurée pour transmettre la deuxième demande (110-2) en réponse au fait que ladite première valeur seuil prédéterminée est dépassée.

5. Le système informatique selon l'une quelconque des revendications 3 à 4, dans lequel la circuiterie de traitement (102 ; 502) est configurée pour déterminer que la fonctionnalité de redémarrage de charge subit une anomalie ou que la fonctionnalité de redémarrage de charge est absente en réponse à la détermination d'une condition de charge de la batterie (30) à la suite de l'interruption de la charge de la batterie (30).

6. Le système informatique (100 ; 500) selon la revendication 5, dans lequel la pluralité de demandes différentes (110) comprend une troisième demande (110-3) étant configurée pour provoquer l'identification d'un état d'inactivité de l'EVSE (20), et la circuiterie de traitement (102 ; 502) est configurée pour déterminer la condition de charge après que l'EVSE (20) a répondu à la troisième demande (110-3).

7. Le système informatique (100 ; 500) selon l'une quelconque des revendications 5 à 6, dans lequel la circuiterie de traitement (102 ; 502) est configurée pour déterminer la condition de charge en réponse à l'obtention d'un indicateur d'un état de charge, SoC, à partir de la batterie (30).

8. Le système informatique (100 ; 500) selon la revendication 7, dans lequel la valeur de SoC attendue est basée sur des caractéristiques de batterie de la batterie (30) et des propriétés de capacité de charge de l'EVSE (20).

9. Le système informatique (100 ; 500) selon l'une quelconque des revendications 1 à 8, dans lequel la circuiterie de traitement (102 ; 502) est configurée pour commander le taux de charge fourni par l'EVSE (20) au VE (10) en transmettant une demande de charge réduite (110-4) du VE (10) à l'EVSE (20) impliquant une demande d'un taux de charge réduit, dans lequel la batterie (30) est adaptée pour être chargée audit taux de charge réduit à la suite d'une réponse par l'EVSE (20) à la demande de charge réduite (110-4).

10. Le système informatique (100 ; 500) selon la revendication 9, dans lequel la demande de charge réduite (110-4) comprend une valeur seuil de charge prédéterminée étant indicative d'un SoC final désiré pour la batterie (30).

11. Le système informatique (100 ; 500) selon l'une quelconque des revendications 9 à 10, dans lequel le taux de charge réduit est basé sur un temps d'inactivité à venir estimé du VE (10), le temps d'inactivité à venir estimé étant obtenu à partir d'un ou plusieurs parmi une entrée utilisateur, un système de gestion de mission, un algorithme de prédiction et un fournisseur de services géographiques.

12. Un véhicule électrique (100 ; 500) comprenant le système informatique selon l'une quelconque des revendications 1 à 11.

13. Un procédé mis en œuvre par ordinateur (200) pour commander la charge d'un véhicule électrique, VE (10), comprenant :
l'exécution (210), par une circuiterie de traitement (102 ; 502) d'un système informatique (100 ; 500), d'une routine de test de fonctionnalité (40) en réponse au fait que le VE (10) est connecté à un équipement d'alimentation de véhicule électrique, EVSE (20), la routine de test de fonctionnalité (40) étant adaptée pour identifier une fonctionnalité de redémarrage de charge dans l'EVSE (20) ;
dans lequel le procédé (200) est **caractérisé en ce qu'**il comprend en outre :
la détermination (220), par la circuiterie de traitement (102 ; 502), sur la base d'un résultat de la routine de test de fonctionnalité (40), d'une anomalie ou d'une absence de la fonctionnalité de redémarrage de charge de l'EVSE (20) ; et
en réponse à la détermination de l'anomalie ou de l'absence de la fonctionnalité de redémarrage de charge, la commande (230), par la circuiterie de traitement (102 ; 502), d'un taux de charge fourni par l'EVSE (20) au VE (10).

14. Un produit programme d'ordinateur comprenant un code de programme pour exécuter, lorsqu'il est exécuté par la circuiterie de traitement (102 ; 502), le procédé selon la revendication 13.

15. Un support de stockage non transitoire lisible par ordinateur comprenant des instructions, qui lorsqu'elles sont exécutées par la circuiterie de traitement (102 ; 502), amènent la circuiterie de traitement (102 ; 502) à exécuter le procédé selon la revendication 13.
